(19) Europäisches Patentamt / European Patent Office / Office européen des brevets

(11) **EP 4 279 176 A1**

(12) **EUROPEAN PATENT APPLICATION**

(43) Date of publication:
**22.11.2023 Bulletin 2023/47**

(21) Application number: **23172191.1**

(22) Date of filing: **09.05.2023**

(51) International Patent Classification (IPC):
**B01J 23/14** (2006.01)     **B01D 53/94** (2006.01)
**B01J 35/00** (2006.01)     **B01J 23/62** (2006.01)
**B01J 23/63** (2006.01)

(52) Cooperative Patent Classification (CPC):
**B01J 35/002; B01D 53/94; B01J 23/14;**
**B01J 23/626; B01J 23/63; B01J 35/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.05.2022 US 202263364987 P**

(71) Applicant: **Johnson Matthey Public Limited Company**
**London EC4A 4AB (GB)**

(72) Inventors:
• **GALLAGHER, Austin Gregory**
  **Savannah, 31408 (US)**
• **MCNAMARA, Nicholas**
  **Pennsylvania, 19087 (US)**
• **TRUCKLE, Yvonne Alison**
  **Billingham, TS23 1LB (GB)**
• **TURRINA, Alessandro**
  **Billingham, TS23 1LB (GB)**

(74) Representative: **Wilson, Nicola Ann**
**Johnson Matthey Public Limited Company**
**Johnson Matthey Technology Centre**
**Blount's Court Road**
**Sonning Common**
**Reading, Berkshire RG4 9NH (GB)**

(54) **TIN CO-DOPED MIXED OXIDES FOR USE IN THREE WAY CATALYSIS**

(57)     The present disclosures provides a catalyst composition comprising a mixed oxide support material and a platinum group metal supported on the mixed oxide support material, the mixed oxide support material comprising a solid solution mixed oxide having the formula $Ce_wZr_xSn_yM_zO_a$, wherein: $0.05 \leq w \leq 0.90$; $0.05 \leq x \leq 0.90$; $0.001 \leq y \leq 0.25$; $0.001 \leq z \leq 0.60$; $w + x + y + z = 1.00$; $1.0 \leq a \leq 2.0$; and M is an element selected from one or more of sodium, potassium, rubidium, caesium, magnesium, calcium, strontium, barium, scandium, yttrium, titanium, hafnium, vanadium, niobium, tantalum, chromium, molybdenum, tungsten, manganese, technetium, rhenium, iron, ruthenium, osmium, cobalt, rhodium, iridium, nickel, palladium, platinum, copper, silver, gold, zinc, aluminium, gallium, thallium, silicon, germanium, lead, bismuth, lanthanum, praseodymium, neodymium, samarium, europium, gadolinium, terbium, erbium, lutetium, dysprosium, holmium, thulium and ytterbium.

**FIG. 8**

EP 4 279 176 A1

**Description**

FIELD OF THE INVENTION

The invention relates to a catalyst composition, a catalyst article, an emission treatment system, a vehicle, a method of treating exhaust gas, as well as to a solid solution mixed oxide, a method of manufacturing the solid solution mixed oxide, a method of manufacturing the catalyst composition and a use of the catalyst composition or catalyst article.

BACKGROUND OF THE INVENTION

A three-way catalyst (TWC) allows simultaneous conversions (-98%) of CO, HCs and $NO_x$ from gasoline engine exhaust to innocuous compounds at stoichiometric air-to-fuel ratio. Specifically, the oxidation of CO and HCs to $CO_2$ and steam ($H_2O$) is mainly catalyzed by Pd, while the reduction of $NO_x$ to $N_2$ is mainly catalyzed by Rh. Modern TWCs use supported platinum group metal (hereinafter "PGM") catalysts (Pd, Rh, Pt, *etc*.) deposited on a single, double or multilayer support, with the support material consisting of metal oxides with high specific surface area, primarily stabilized alumina and ceria-containing oxygen storage materials. The supported catalyst is washcoated on a ceramic monolithic substrate.

Cerium oxide ($Ce_xO_y$), well known for its high oxygen storage capacity (OSC) due to the function of the $Ce^{4+}/Ce^{3+}$ redox pair, plays an important role in TWC performance. Besides providing high surface area for PGM metal dispersion, $Ce_xO_y$ can also assist the feedback control of stoichiometric condition by uptaking or donating oxygen during fuel lean/rich perturbations. Further incorporation of zirconium oxide ($ZrO_2$) into $Ce_xO_y$ fluorite structure (denoted as CZO, i.e. a ceria-zirconia mixed oxide) improves the thermal stability of $Ce_xO_y$, and enhances the mobility of lattice oxygen through the formation of oxygen vacancies.

It is known that doping mixed oxides, such as ceria-zirconia mixed oxides, with tin may improve the OSC properties of the mixed oxides. For example, US 2021/0299647 A1 relates to doping ceria-zirconia mixed oxides with tin oxide. However, doping the mixed oxides with tin typically results in a crystal structure that may not be particularly stable to phase separation of the mixed oxide(s), particularly at higher temperatures.

There remains a need to provide tin-doped mixed oxides for use in TWC applications that provide for improved OSC properties yet remain more stable, particularly at the high temperatures experienced by TWCs in use, for example to treat the emissions from a gasoline engine.

SUMMARY OF THE INVENTION

One aspect of the present disclosure is directed to a catalyst composition comprising a mixed oxide support material and a platinum group metal supported on the mixed oxide support material, the mixed oxide support material comprising a solid solution mixed oxide having the formula $Ce_wZr_xSn_yMzO_a$, wherein: $0.05 \leq w \leq 0.90$; $0.05 \leq x \leq 0.90$; $0.001 \leq y \leq 0.25$; $0.001 \leq z \leq 0.60$; $w + x + y + z = 1.00$; $1.0 \leq a \leq 2.0$; and M is an element selected from one or more of sodium, potassium, rubidium, caesium, magnesium, calcium, strontium, barium, scandium, yttrium, titanium, hafnium, vanadium, niobium, tantalum, chromium, molybdenum, tungsten, manganese, technetium, rhenium, iron, ruthenium, osmium, cobalt, rhodium, iridium, nickel, palladium, platinum, copper, silver, gold, zinc, aluminium, gallium, thallium, silicon, germanium, lead, bismuth, lanthanum, praseodymium, neodymium, samarium, europium, gadolinium, terbium, erbium, lutetium, dysprosium, holmium, thulium and ytterbium.

Another aspect of the present disclosure is directed to a catalyst article comprising a substrate and the catalyst composition of the above aspect, wherein the catalyst composition is disposed on the substrate.

Another aspect of the present disclosure is directed to an emission treatment system comprising the catalyst article of the above aspect.

Another aspect of the present disclosure is directed to a vehicle comprising the emission treatment system of the above aspect.

Another aspect of the present disclosure is directed to a method of treating an exhaust gas, the method comprising: providing the catalyst article of the above aspect; and contacting the catalyst article with an exhaust gas.

Another aspect of the present disclosure is directed to a solid solution mixed oxide having the formula $Ce_wZr_xSn_yMzO_a$, wherein: $0.05 \leq w \leq 0.90$; $0.05 \leq x \leq 0.90$; $0.001 \leq y \leq 0.25$; $0.001 \leq z \leq 0.60$; $w + x + y + z = 1.00$; $1.0 \leq a \leq 2.0$; and M is an element selected from one or more of sodium, potassium, rubidium, caesium, magnesium, calcium, strontium, barium, scandium, yttrium, titanium, hafnium, vanadium, niobium, tantalum, chromium, molybdenum, tungsten, manganese, technetium, rhenium, iron, ruthenium, osmium, cobalt, rhodium, iridium, nickel, palladium, platinum, copper, silver, gold, zinc, aluminium, gallium, thallium, silicon, germanium, lead, bismuth, lanthanum, praseodymium, neodymium, samarium, europium, gadolinium, terbium, erbium, lutetium, dysprosium, holmium, thulium and ytterbium.

Another aspect of the present disclosure is directed to a method of manufacturing the solid solution mixed oxide of the above aspect, the method comprising: providing a solution comprising cations of each of Ce, Zr, Sn and M; contacting the solution with a base to provide a slurry; heating the slurry at a temperature of from 20 to 200 °C to provide a mixed-oxide precursor; and heating the mixed-oxide precursor at a temperature of greater than 450 °C to provide the solid solution mixed oxide.

Another aspect of the present disclosure is directed to a method of manufacturing the catalyst composition of the above aspect, the method comprising: providing a solid solution mixed oxide according to the above aspect or manufacturing a solid solution mixed oxide according to the method of the above aspect; and disposing the platinum group metal on the solid solution mixed oxide.

Another aspect of the present disclosure is directed to the use of the catalyst composition of the above aspect or the catalyst article of the above aspect in an emission treatment system.

BRIEF DESCRIPTION OF THE DRAWINGS

FIG. 1 shows XRD patterns of the doped ceria samples of the present invention and Comparative Example 1 after calcination.
FIG. 2 shows XRD patterns of the doped ceria samples of the present invention and Comparative Example 1 after accelerated aging.
FIG. 3 shows oxygen storage capacities (OSC) of the doped ceria samples of the present invention and Comparative Example 1 after accelerated aging.
FIG. 4 shows NO conversion during the TWC light-off test for the JM-MO-2 Catalyst of the present invention and Comparative Catalyst 1 after calcination.
FIG. 5 shows CO conversion during the TWC light-off test for the JM-MO-2 Catalyst of the present invention and Comparative Catalyst 1 after calcination.
FIG. 6 shows THC conversion during the TWC light-off test for the JM-MO-2 Catalyst of the present invention and Comparative Catalyst 1 after calcination.
FIG. 7 shows XRD results of the powders of solid oxide samples of the present invention after calcination.
FIG. 8 shows $T_{20}$ values of NO, CO, and THC conversions for Comparative Catalyst 2 and JM-MO-10 Catalyst of the present invention.

DETAILED DESCRIPTION OF THE INVENTION

The present invention seeks to tackle at least some of the problems associated with the prior art or at least to provide a commercially acceptable alternative solution thereto.

In a first aspect, the present invention provides catalyst composition comprising a mixed oxide support material and a platinum group metal supported on the mixed oxide support material, the mixed oxide support material comprising a solid solution mixed oxide having the formula $Ce_wZr_xSn_yM_zO_a$, wherein:

$$0.05 \leq w \leq 0.90;$$

$$0.05 \leq x \leq 0.90;$$

$$0.001 \leq y \leq 0.25;$$

$$0.001 \leq z \leq 0.60;$$

$$w + x + y + z = 1.00;$$

$$1.0 \leq a \leq 2.0;$$

and M is an element selected from one or more of sodium, potassium, rubidium, caesium, magnesium, calcium, strontium, barium, scandium, yttrium, titanium, hafnium, vanadium, niobium, tantalum, chromium, molybdenum, tungsten, manganese, technetium, rhenium, iron, ruthenium, osmium, cobalt, rhodium, iridium, nickel, palladium, platinum, copper, silver, gold, zinc, aluminium, gallium, thallium, silicon, germanium, lead, bismuth, lanthanum, praseodymium, neodymium, samarium, europium, gadolinium, terbium, erbium, lutetium, dysprosium, holmium, thulium and ytterbium.

Each aspect or embodiment as defined herein may be combined with any other aspect(s) or embodiment(s) unless clearly indicated to the contrary. In particular, any features indicated as being preferred or advantageous may be combined with any other feature indicated as being preferred or advantageous.

Surprisingly, in comparison with conventional catalyst compositions and in particular those comprising CZO support materials, the catalyst composition of the present invention may exhibit improved OSC properties, for example when used as a TWC, while also remaining more thermally stable to phase separation. The catalyst composition may therefore maintain its high OSC activity for longer in use.

Without wishing to be bound by theory, it is thought that the tin may provide the improved OSC properties by a similar mechanism to ceria, i.e. due to the function of a $Sn^{2+}/Sn^{4+}$ redox pair.

Moreover, without wishing to be bound by theory, it is thought that the lack of stability to phase separation of known tin-doped mixed oxides may be at least partially as a result of the small cationic radius of tin (i.e. $Sn^{2+}$ or $Sn^{4+}$) compared to the cationic radius of zirconium (i.e. $Zr^{4+}$) and/or cerium (i.e. $Ce^{3+}$ or $Ce^{4+}$). As such, in a fluorite lattice structure, the distance between the tin and the oxygen ions, compared to that of zirconium and oxygen ions, for example, may be larger. Thus, this may create enthalpic bond strain. In other words, the Sn-O "bonds" may be weaker than would be for, for example, Zr-O "bonds" within the crystal lattice. Thus, due to the presence of tin in the lattice causing bond strain, the mixed oxide may be more likely to phase separate, due to the balance of the enthalpic contribution and the entropic contribution of the Gibbs Free Energy of the phase separation reaction moving in favour of phase separation.

However, the inventors of the present invention have surprisingly found that further co-doping tin-doped CZO with larger cations (i.e. larger than tin, typically larger than cerium and/or zirconium) may result in a more stable crystal lattice, while also benefiting from the improved OSC properties introduced by the tin. Thus, when the solid solution mixed oxide is used as a support material in a catalyst composition such as in the present invention, advantageous catalytic properties, particularly for TWC applications, may surprisingly be exhibited.

Without wishing to be bound by theory, it is thought that the introduction of these larger cations may provide at least the following two benefits: (i) the bond strain of the lattice may be reduced due to the balance of larger and smaller cations, reducing the impact that the inclusion of only tin would have on the enthalpic contribution to the Gibbs Free Energy, and (ii) the inclusion of one or more further cations may increase the disorder in the mixed oxide lattice, thereby causing the entropic contribution to the Gibbs Free Energy to be less favourable to phase separation. Thus, surprisingly, it may be possible to provide a more stable mixed oxide, particularly at high temperatures, while still providing the improved OSC properties. This is advantageous in emission treatment applications, particularly for TWC applications.

Thus, advantageously, the solid solution mixed oxide of the invention may be used in place of existing support materials, such as where CZO is used as a support material in a known catalyst composition, to provide further and/or improved OSC properties to the catalyst, while remaining relatively stable to phase separation in use. The mixed oxide may also provide high OSC across the full temperature range of typical operating temperatures.

The term "support material" as used herein may encompass any known support material that may be used to support PGMs in the field of the present invention, typically in powder form. However, the support material of the present invention is a mixed oxide support material according to the appended claims.

The term "mixed oxide" as used herein may encompass an oxide that contains cations of more than one chemical element, for example at least Ce, Zr, Sn and M in this case. The mixed oxide may be in a single phase, for example.

The $Ce_wZr_xSn_yM_zO_a$ of the invention is typically crystalline. Preferably, the mixed oxide is crystalline. The term "crystalline" as used herein is used within its normal meaning in the art and may encompass a solid material having long-range order, i.e. periodic translational ordering of atoms or molecules within the solid.

The term "platinum group metal" or "PGM" as used herein may encompass one or more elements selected from ruthenium, rhodium, palladium, osmium, iridium, and platinum. Preferably, the PGM comprises platinum, palladium, rhodium, or a mixture or alloy thereof. Such metals may be particularly suitable for carrying out three-way catalysis. The PGM may be in the form of an alloy.

The term "supported on" as used herein may encompass that the PGM is in direct contact with and stably disposed on the mixed oxide support material, either on the surface and/or within the pores of the mixed oxide support material.

The term "solid solution" as used herein may encompass a mixture of two crystalline solids that coexist as a new crystalline solid, or crystal lattice, for example. In other words, the mixed oxide is typically substantially one phase, rather than a mixture of different phases. Preferably, the solid solution mixed oxide is at least 95% phase pure, more preferably at least 97% phase pure, even more preferably at least 99% phase pure, still more preferably completely phase pure, allowing for the presence of unavoidable impurities. The term "phase pure" as used herein encompasses that the solid solution mixed oxide comprises only one type of crystal structure. The level of phase purity may be measured by X-ray diffraction, for example. The skilled person is aware of suitable techniques, for example by the use of Rietveld refinement of the X-ray powder diffraction pattern. Preferably, the major phase of the solid solution mixed oxide is fluorite. The skilled person would be able to identify a fluorite X-ray diffraction pattern.

In the catalyst composition of the invention, $1.0 \leq a \leq 2.0$, preferably $1.3 \leq a \leq 2.0$, more preferably $1.5 \leq a \leq 2.0$, more preferably $1.6 \leq a \leq 2.0$, most preferably 'a' is about 2. Although 'a' may typically be about 2, the amount of oxygen present in the solid solution mixed oxide may vary between these amounts due to changes in oxidation states of the cations, for example. As described herein, cerium may vary between the $Ce^{III}$ and $Ce^{IV}$ oxidation states and the tin may vary between the $Sn^{II}$ and $Sn^{IV}$ oxidation states, for example. The relative amount of oxygen may therefore vary as a result. Without wishing to be bound by theory, it is thought that the variation in oxygen and oxidation states should not substantially affect the crystal structure of the mixed oxide.

$$a = 2 - \frac{1}{2}b - c - \frac{3}{2}d$$

Where b is the mole fraction of cations in the 3+ oxidation state excepting the molar contribution of O, c is the mole fraction of cations in the 2+ oxidation state excepting the molar contribution of O, and d is the mole fraction of cations in the 1+ oxidation state excepting the molar contribution of O.

M is an element selected from one or more of sodium, potassium, rubidium, caesium, magnesium, calcium, strontium, barium, scandium, yttrium, titanium, hafnium, vanadium, niobium, tantalum, chromium, molybdenum, tungsten, manganese, technetium, rhenium, iron, ruthenium, osmium, cobalt, rhodium, iridium, nickel, palladium, platinum, copper, silver, gold, zinc, aluminium, gallium, thallium, silicon, germanium, lead, bismuth, lanthanum, praseodymium, neodymium, samarium, europium, gadolinium, terbium, erbium, lutetium, dysprosium, holmium, thulium and ytterbium. When M is more than one of the recited elements, it should be understood that the total amount of M is encompassed by the 'z' parameter. In other words, if $M_z$ is $A_{z1}B_{z2}C_{z3}$, for example, where A, B and C are each one of the recited elements, then the parameter 'z' encompasses $z1 + z2 + z3$, i.e. $z = z1 + z2 + z3$ in this case. Each of the recited elements may contribute to the stabilisation of the mixed oxide, as hypothesised above, for example due to their large cations.

Preferably, the catalyst composition is for three way catalysis. In other words, the catalyst composition is preferably capable of catalysing at least one of the target reactions of a TWC. Preferably, the catalyst composition is a TWC.

In some preferred embodiments, y + z is less than 0.15, preferably less than or equal to 0.13, more preferably less than or equal to 0.11, even more preferably less than or equal to 0.10, still more preferably about 0.10. Such a balance of components of the mixed oxide may provide catalyst compositions that are particularly stable and have excellent OSC properties.

In alternative preferred embodiments, $0.05 \leq y \leq 0.15$, more preferably $0.07 \leq y \leq 0.13$, even more preferably $0.08 \leq y \leq 0.12$. In an alternative preferred embodiment, $0.05 \leq y \leq 0.10$. In another alternative preferred embodiment, $0.10 \leq y \leq 0.15$. Preferably, y is greater than or equal to 0.005, more preferably 0.01, even more preferably 0.02, still more preferably 0.05. Such amounts of tin doping may result in a catalyst composition that is particularly stable and has excellent catalytic properties.

In alternative preferred embodiments, $0.05 \leq z \leq 0.15$, more preferably $0.07 \leq z \leq 0.13$, even more preferably $0.08 \leq z \leq 0.12$. In an alternative preferred embodiment, $0.05 \leq z \leq 0.10$. In another alternative preferred embodiment, $0.10 \leq z \leq 0.15$. Preferably, z is greater than or equal to 0.005, more preferably 0.01, even more preferably 0.02, still more preferably 0.05. Such amounts of tin doping may result in a catalyst composition that is particularly stable and has excellent catalytic properties.

Preferably, w + x is greater than or equal to 0.80, preferably greater than or equal to 0.85, more preferably greater than or equal to 0.90. For example, preferably $0.80 \leq w + x \leq 0.95$, more preferably $0.85 \leq w + x \leq 0.95$, even more preferably $0.85 \leq w + x \leq 0.90$. Such a balance of components of the mixed oxide may provide catalyst compositions that are particularly stable and have excellent OSC properties.

Preferably, w + y is greater than 0.5, preferably greater than or equal to 0.51, even more preferably greater than or equal to 0.55, still more preferably greater than or equal to 0.60. Such a balance of components of the mixed oxide may provide catalyst compositions that are particularly stable and have excellent OSC properties.

Preferably, $0.07 \leq y \leq 0.11$, more preferably $0.07 \leq y + z \leq 0.11$. Such a balance of components of the mixed oxide may provide catalyst compositions that are particularly stable and have excellent OSC properties.

Preferably, $0.20 \leq w \leq 0.80$, more preferably $0.30 \leq w \leq 0.70$, even more preferably $0.40 \leq w \leq 0.60$, still more preferably $0.50 \leq w \leq 0.60$. Such a balance of components of the mixed oxide may provide catalyst compositions that are particularly stable and have excellent OSC properties.

In some preferred embodiments, M comprises two or more different elements. In other words, in such preferred embodiments, in the solid solution mixed oxide there are five or more different cations. As described above, having a larger number of different cations may contribute to the entropic component of the Gibbs Free Energy for phase separation, making phase separation less favourable. Thus, catalyst compositions that are particularly stable and have excellent OSC properties may be provided.

In some preferred embodiments, $0.15 \leq w$, $x \leq 0.25$ and $0.30 \leq y + z \leq 0.70$. By the term "$0.15 \leq w$, $x \leq 0.25$" it is meant that both of $0.15 \leq w \leq 0.25$ and $0.15 \leq x \leq 0.25$ are fulfilled. In other words, in some embodiments it is preferred that the molar ratio of each cation in the solid solution mixed oxide is substantially equal. In this embodiment, it may also be preferred that $0.15 \leq y \leq 0.25$ and/or $0.30 \leq z \leq 0.50$. Preferably, $0.17 \leq w$, $x \leq 0.23$, more preferably $0.19 \leq w$, $x \leq 0.21$. Preferably, $0.40 \leq y + z \leq 0.60$. Such a balance of components of the mixed oxide may provide catalyst compositions that are particularly stable and have excellent OSC properties. In the preferred embodiments of this paragraph, it is further preferred that $M_z$ is $M'_{z1}M''_{z2}$, where:

$$0.15 \leq z1 \leq 0.25;$$

$$0.15 \leq z2 \leq 0.25;$$

M' is an element selected from one of calcium, strontium, barium, scandium, yttrium, hafnium, lanthanum, praseodymium, neodymium, samarium, europium or gadolinium;

M" is an element selected from one or more of sodium, potassium, rubidium, caesium, magnesium, calcium, strontium, barium, scandium, yttrium, titanium, hafnium, vanadium, niobium, tantalum, chromium, molybdenum, tungsten, manganese, technetium, rhenium, iron, ruthenium, osmium, cobalt, rhodium, iridium, nickel, palladium, platinum, copper, silver, gold, zinc, aluminium, gallium, thallium, silicon, germanium, lead, bismuth, lanthanum, praseodymium, neodymium, samarium, europium, gadolinium, terbium, erbium, lutetium, dysprosium, holmium, thulium and ytterbium; and

M' is different to M". For the avoidance of doubt, as described elsewhere herein, it should be understood that $z = z1 + z2$ in this embodiment. Such a balance of components of the mixed oxide may provide catalyst compositions that are particularly stable and have excellent OSC properties.

Preferably, M' is yttrium. In an alternative preferred embodiment, M' is lanthanum. In an alternative preferred embodiment, M' is neodymium. In an alternative preferred embodiment, M' is strontium. Such mixed oxides may result in catalyst compositions that are particularly stable and have excellent OSC properties.

Preferably, M" comprises only one element. Accordingly, the cations of the mixed oxide may preferably consist of five different elements.

Preferably, $0.17 \leq z1 \leq 0.23$ and/or $0.17 \leq z2 \leq 0.23$, more preferably $0.19 \leq z1 \leq 0.21$ and/or $0.19 \leq z2 \leq 0.21$. Such a balance of components of the mixed oxide may provide catalyst compositions that are particularly stable and have excellent OSC properties.

In some preferred embodiments, M does not comprise lanthanum. In some preferred embodiments, M does not comprise yttrium. In some preferred embodiments, M does not comprise either lanthanum or yttrium. In other words, in some preferred embodiments, M is an element selected from one or more of sodium, potassium, rubidium, caesium, magnesium, calcium, strontium, barium, scandium, titanium, hafnium, vanadium, niobium, tantalum, chromium, molybdenum, tungsten, manganese, technetium, rhenium, iron, ruthenium, osmium, cobalt, rhodium, iridium, nickel, palladium, platinum, copper, silver, gold, zinc, aluminium, gallium, thallium, silicon, germanium, lead, bismuth, lanthanum, praseodymium, neodymium, samarium, europium, gadolinium, terbium, erbium, lutetium, dysprosium, holmium, thulium and ytterbium; in some preferred embodiments M is an element selected from one or more of sodium, potassium, rubidium, caesium, magnesium, calcium, strontium, barium, scandium, yttrium, titanium, hafnium, vanadium, niobium, tantalum, chromium, molybdenum, tungsten, manganese, technetium, rhenium, iron, ruthenium, osmium, cobalt, rhodium, iridium, nickel, palladium, platinum, copper, silver, gold, zinc, aluminium, gallium, thallium, silicon, germanium, lead, bismuth, praseodymium, neodymium, samarium, europium, gadolinium, terbium, erbium, lutetium, dysprosium, holmium, thulium and ytterbium; or in some preferred embodiments M is an element selected from one or more of sodium, potassium, rubidium, caesium, magnesium, calcium, strontium, barium, scandium, titanium, hafnium, vanadium, niobium, tantalum, chromium, molybdenum, tungsten, manganese, technetium, rhenium, iron, ruthenium, osmium, cobalt, rhodium, iridium, nickel, palladium, platinum, copper, silver, gold, zinc, aluminium, gallium, thallium, silicon, germanium, lead, bismuth, praseodymium, neodymium, samarium, europium, gadolinium, terbium, erbium, lutetium, dysprosium, holmium, thulium and ytterbium.

In the preferred embodiments where $0.15 \leq w$, $x \leq 0.25$ and $0.30 \leq y + z \leq 0.70$ described herein, the mean cationic radius of Ce, Zr, Sn and M in the solid solution mixed oxide is preferably from 90 to 106 pm. However, this preferred feature may also be applicable to all aspects described herein. The mean cationic radius may be determined by the 8-coordinate effective ionic radius (as defined in R.D. Shannon, Acta Cryst., 1976, A32, 751). Such a determination of cationic radius is well known in the field. It should be noted that the mean cationic radius of the Ce, Zr, Sn and M cations in the solid solution mixed oxide is weighted relative to the molar amounts of the cations in the solid solution mixed oxide. In other words, the "mean cationic radius of Ce, Zr, Sn and M in the solid solution mixed oxide" as defined may be defined as $wR_{Ce} + xR_{Zr} + yR_{Sn} + zR_M$, where $R_A$ is the 8-coordinate effective ionic radius of element A in the oxidation state it is present in the solid solution mixed oxide. Preferably, the mean cationic radius of Ce, Zr, Sn and M in the solid solution mixed oxide is from 92 to 98 pm, more preferably 93 to 97 pm. Alternatively, the mean cationic radius of Ce, Zr, Sn and M in the solid solution mixed oxide is preferably from 90 to 106 pm; more preferably from 90 to 100 pm; even more preferably, 92 to 98 pm or 93 to 97 pm. Such a balance of components of the mixed oxide may provide catalyst compositions that are particularly stable and have excellent OSC properties.

Preferably, M is an element selected from one or more of calcium, strontium, barium, scandium, yttrium, hafnium, lanthanum, praseodymium, neodymium, samarium, europium and gadolinium, more preferably M is an element selected from one or more of calcium, strontium, barium, yttrium, lanthanum, neodymium and gadolinium. Such mixed oxides may provide catalyst compositions that are particularly stable and have excellent OSC properties.

In some preferred embodiments, M comprises only one element. In other words, in such preferred embodiments, in the solid solution mixed oxide there are four different cations only. Even though, as described above, having a larger number of different cations may contribute to the entropic component of the Gibbs Free Energy for phase separation, making phase separation less favourable, a stable solid solution mixed oxide having excellent OSC properties may still be provided with only four different cations, for example with the balance of cations described elsewhere herein. Thus, such mixed oxides may also be preferred.

Preferably, the platinum group metal comprises one or more of platinum, palladium and rhodium, preferably the platinum group metal comprises platinum. Such PGMs may result in a catalyst composition having particularly desirable catalytic properties, such as for TWC applications.

In a further aspect, the present invention provides a catalyst article comprising a substrate and the catalyst composition of any preceding claim, wherein the catalyst composition is disposed on the substrate.

The term "catalyst article" used herein may encompass an article in which a catalyst is supported thereon or therein. The article may take the form of, for example, a honeycomb monolith, or a filter, e.g. a wall flow filter or a flow-through filter.

The term "substrate" as used herein may encompass, for example, a ceramic or metallic honeycomb, or a filter block, *e.g.* a wall flow filter or flow-through filter. The substrate may comprise a ceramic monolithic substrate. The substrate may vary in its material composition, size and configuration, cell shape and density, and wall thickness. Suitable substrates are known in the art, such as cordierite.

The term "disposed on" in the context of this aspect may encompass both having the catalyst composition directly disposed on the substrate, i.e. with no intervening material, and/or indirectly disposed on the substrate, i.e. with intervening material. If the substrate is porous, then the term "disposed on" may also encompass having the catalyst composition disposed therein, for example within the pores of the substrate, i.e. wherein the catalyst composition is disposed thereon and/or therein. The catalyst composition is typically disposed on the substrate in the form of a washcoat. The term "washcoat" as used herein is well-known in the field and refers to an adherent coating that is applied to a substrate usually during the production of a catalyst.

The preferred features of the first aspect apply equally to this aspect. The advantages described above with reference to the first aspect may also be equally applicable to the resulting catalyst article comprising the catalyst composition.

Preferably, the catalyst article is a three way catalyst.

The catalyst article preferably has a washcoat loading of from 1 g/in$^3$ to 3 g/in$^3$.

Preferably, the substrate comprises a wall flow filter substrate. In an alternative preferred embodiment, the substrate comprises a flow-through substrate.

The catalyst article preferably comprises two or more catalyst regions disposed on the substrate, the catalyst composition being present in one or more of the catalyst regions.

The term "catalyst region" as used herein may encompass an area on a substrate, typically obtained by drying and/or calcining a washcoat. A "region" can, for example, be disposed or supported on a substrate as a "layer" or a "zone". The area or arrangement on a substrate is generally controlled during the process of applying the washcoat to the substrate. The "region" typically has distinct boundaries or edges (i.e. it is possible to distinguish one region from another region using conventional analytical techniques).

It is preferable that the "catalyst region" has a substantially uniform composition (i.e. there is no substantial difference in the composition of the washcoat when comparing one part of the region with another part of that region, on average). Substantially uniform composition in this context refers to a material (e.g., region) where the difference in composition when comparing one part of the region with another part of the region is 5% or less, usually 2.5% or less, and most commonly 1% or less.

The term "disposed on" in the context of this embodiment may encompass both having the catalyst region directly disposed on the substrate, i.e. with no intervening material, and/or indirectly disposed on the substrate, i.e. with intervening material. If the substrate is porous, then the term "disposed on" may also encompass having the catalyst region disposed therein, for example within the pores of the substrate, i.e. wherein the catalyst region is disposed thereon and/or therein. Preferably, the catalyst region is a washcoat layer.

Other support materials and catalysts other than those of the present invention may also be present on and/or in the catalyst article of this aspect.

When present, the catalyst article preferably comprises from 2 $g/ft^3$ to 15 $g/ft^3$ rhodium, more preferably from 3 $g/ft^3$ to 10 $g/ft^3$ rhodium. When present, the catalyst article preferably comprises from 20 $g/ft^3$ to 200 $g/ft^3$ palladium, more preferably from 30 $g/ft^3$ to 150 $g/ft^3$ palladium. When present, the catalyst article preferably comprises from 2 $g/ft^3$ to 200 $g/ft^3$ platinum, preferably from 10 $g/ft^3$ to 100 $g/ft^3$ platinum.

In a further aspect, the present invention provides an emission treatment system comprising the catalyst article described herein. Preferably, the emission treatment system is for a gasoline engine. Preferably, the gasoline engine operates under stoichiometric conditions.

In a further aspect, the present invention provides a vehicle comprising the emission treatment system described herein.

In a further aspect, the present invention provides a method of treating an exhaust gas, the method comprising: providing the catalyst article described herein; and contacting the catalyst article with an exhaust gas. Preferably, the exhaust gas is from a gasoline engine. Preferably, the gasoline engine operates under stoichiometric conditions.

In a further aspect, the present invention provides a solid solution mixed oxide having the formula $Ce_wZr_xSn_yMzO_a$, wherein:

$$0.05 \leq w \leq 0.90;$$

$$0.05 \leq x \leq 0.90;$$

$$0.001 \leq y \leq 0.25;$$

$$0.001 \leq z \leq 0.60;$$

$$w + x + y + z = 1.00;$$

$$1.0 \leq a \leq 2.0;$$

and

M is an element selected from one or more of sodium, potassium, rubidium, caesium, magnesium, calcium, strontium, barium, scandium, yttrium, titanium, hafnium, vanadium, niobium, tantalum, chromium, molybdenum, tungsten, manganese, technetium, rhenium, iron, ruthenium, osmium, cobalt, rhodium, iridium, nickel, palladium, platinum, copper, silver, gold, zinc, aluminium, gallium, thallium, silicon, germanium, lead, bismuth, lanthanum, praseodymium, neodymium, samarium, europium, gadolinium, terbium, erbium, lutetium, dysprosium, holmium, thulium and ytterbium.

The preferred features and advantages discussed herein with reference to the first aspect apply equally to this aspect. Such a solid solution mixed oxide may advantageously also be used in other applications which may require stable mixed oxides having excellent OSC properties.

In a further aspect, the present invention provides a method of manufacturing the solid solution mixed oxide described herein, the method comprising:

providing a solution comprising cations of each of Ce, Zr, Sn and M;
contacting the solution with a base to provide a slurry;
heating the slurry at a temperature of from 20 to 200 °C to provide a mixed-oxide precursor; and
heating the mixed-oxide precursor at a temperature of greater than 450 °C to provide the solid solution mixed oxide.

Providing a solution comprising cations of each of Ce, Zr, Sn and M typically comprises dissolving soluble salts of each of Ce, Zr, Sn and M in water. In other words, the solution is preferably an aqueous solution, i.e. an aqueous solution comprising the metal cations and their respective counterion(s). In the method of providing the solution, the order of addition of each cation salt is not particularly limited. Suitable salts can be in somewhat water soluble form, include but not limited to, nitrates, chlorides, ammonium nitrates, and oxynitrates, sulphates, carbonates, and any number of organic ligands, such as acetate or citrate.

Contacting the solution with a base may comprise adding a base, for example in powder form, to the solution and/or contacting the solution comprising the cations with a basic solution. Contacting the solution comprising the cations with a basic solution typically comprises adding the solution to the basic solution or *vice versa.* Preferably, contacting the solution with a base comprises raising the pH of the solution, preferably to a pH of from about 7 to about 9. Contacting the solution with a base typically causes precipitation of a hydrous oxide of the metal cations in the solution. In other words, the slurry may comprise a hydrous oxide of Ce, Zr, Sn and M. A suitable basic solution can contain a weak base, such as $NH_3$, urea, or a quaternary ammonium hydroxide (e.g., tetraethyl ammonium hydroxide), or any strong base solution like NaOH, KOH, $Ba(OH)_2$, $Sr(OH)_2$, *etc.* The suitable basic solution may comprise a buffer solution comprising ammonium nitrate, ammonia and water, for example.

Heating the slurry at a temperature of from 20 to 200 °C typically leads to drying of the slurry, for example. In other words, heating the slurry preferably comprises at least partially drying the slurry. The mixed-oxide precursor may therefore comprise a hydrous oxide powder of Ce, Zr, Sn and M. The slurry is typically heated at a temperature of from 20 to 200 °C for from 1 hour to 24 hours. The slurry may be heated in multiple stages of heating.

Heating the mixed-oxide precursor at a temperature of greater than 450 °C typically comprises calcining the mixed-oxide precursor / hydrous oxide powder of Ce, Zr, Sn and M. The mixed-oxide precursor is typically heated in air for 30 mins or longer. This heating step typically causes formation of a crystalline mixed oxide.

Advantageously, such a method is a simple one-pot synthesis. The method may also be easily scalable to larger scale manufacture. The cations of the resulting mixed oxide are typically substantially evenly dispersed within the solid solution mixed oxide. This may not be achieved by a method of manufacture involving, for example, incipient wetness impregnation of tin into a CZO.

In a further aspect, the present invention provides a method of manufacturing the catalyst composition described herein, the method comprising:

> providing a solid solution mixed oxide as described herein or manufacturing a solid solution mixed oxide according to the method described herein; and
> disposing the platinum group metal on the solid solution mixed oxide.

Disposing the platinum group metal on the solid solution mixed oxide typically comprises contacting a PGM precursor, such as a PGM salt, for example a nitrate, acetate or chloride salt, with the solid solution mixed oxide and depositing the PGM onto the solid solution mixed oxide via incipient wetness impregnation or wet impregnation. Alternative methods involve the use of PGM complexes, such as PGM-polymer complexes. Suitable methods are known to the skilled person.

Preferably, after the step of contacting the solution with a base and prior to the step of heating the slurry, the method further comprises:

> (i) washing and/or filtering the slurry, and contacting the resulting product with a further base to form a further slurry; and/or
> (ii) modifying the pH of the slurry or further slurry using a base.

Washing the slurry preferably comprises washing the slurry with deionized (DI) water. Washing and/or filtering the slurry may advantageously remove any excess starting material that has not formed a hydrous oxide, for example. Thus, the resulting mixed oxide may have fewer impurities. The preferable embodiments in relation to contacting the solution with a base as described above apply equally to these further embodiments.

Modifying the pH of the slurry or further slurry using a base typically comprises contacting the slurry or further slurry with a basic solution. Modifying the pH of the slurry preferably comprising raising the pH of the slurry, preferably to a pH of from about 7 to about 9. Such modification can accelerate the formation of a porous network of particles which imparts thermal stability to high temperature aging.

The method preferably comprises washing and/or filtering the mixed-oxide precursor prior to heating the mixed-oxide precursor. This step may also advantageously remove any excess starting material that has not formed a hydrous oxide, for example. Thus, the resulting mixed oxide may have fewer impurities.

In a further aspect, the present invention provides the use of the catalyst composition of described herein or the catalyst article described herein in an emission treatment system. Such a use may have the advantages described herein with reference to the other aspects of the invention.

The invention will now be described in relation to the following non-limiting examples.

Example 1: General Preparation of Mixed Oxides with four components

A solution of metal ions was prepared by dissolving appropriate metal salts (cerium ammonium nitrate, zirconium oxynitrate, tin (IV) chloride, lanthanum nitrate, neodymium nitrate, gadolinium nitrate, yttrium nitrate, barium nitrate, strontium nitrate, calcium chloride) in DI water as described in **Table 1.** A buffer solution was prepared by combining ammonium nitrate, ammonia, and water in a molar ratio of 1:10:89. The metal salt solution was then added to a mechanically stirred vessel containing the buffer solution. A precipitate formed upon mixing of the two solutions. The mixture was allowed to stir for an additional fifteen minutes. The hydrous oxide precipitate was then filtered in a filter press and washed with DI water.

**Table 1 Metal salt solution composition used to prepare doped MO in Examples**

| Name | Molar Composition | | | | |
|---|---|---|---|---|---|
| | $H_2O$ | Ce | Zr | Sn | Component 4 |
| **Comparative Sample 1** | 26 | 0.50 | 0.50 | n/a | n/a |
| **JM-MO-1** | 26 | 0.50 | 0.40 | 0.09 | La: 0.01 |
| **JM-MO-2** | 26 | 0.50 | 0.40 | 0.09 | Nd: 0.01 |
| **JM-MO-3** | 26 | 0.50 | 0.40 | 0.09 | Gd: 0.01 |
| **JM-MO-4** | 26 | 0.50 | 0.40 | 0.09 | Y: 0.01 |
| **JM-MO-5** | 26 | 0.50 | 0.40 | 0.09 | Ba: 0.01 |
| **JM-MO-6** | 26 | 0.50 | 0.40 | 0.09 | Sr: 0.01 |
| **JM-MO-7** | 26 | 0.50 | 0.40 | 0.09 | Ca: 0.01 |

A slurry was prepared by combining hydrous oxide (metals basis), ammonium nitrate, ammonia, and water in a molar ratio of 1:1:10:89 and mechanically stirred for 5 minutes. The slurry was then transferred to a Teflon sleeve and sealed in a Parr stainless-steel acid digestion vessel. The slurry was then heated to 150 °C and mixed for 2 h. Upon cooling to <60 °C, the hydrous oxide was filtered and washed with DI water until the exiting filtrate reached a pH <7. The hydrous oxide was then dried at 90 °C for 16 h, ground to a powder, and further dried at 120 °C for 2 h. Upon drying, the hydrous oxide was calcined in air at 500 °C to form a crystalline solid oxide. The resulting solid metal oxide compositions are summarized in **Table 2.**

**Table 2 Doped MO compositions in mole fractions (excluding molar contribution of O)**

| Name | Mole fraction (excluding O) | | | |
|---|---|---|---|---|
| | Ce | Zr | Sn | Component 4 |
| **Comparative Sample 1** | 0.50 | 0.50 | n/a | n/a |
| **JM-MO-1** | 0.50 | 0.40 | 0.09 | La: 0.01 |
| **JM-MO-2** | 0.50 | 0.40 | 0.09 | Nd: 0.01 |
| **JM-MO-3** | 0.50 | 0.40 | 0.09 | Gd: 0.01 |
| **JM-MO-4** | 0.50 | 0.40 | 0.09 | Y: 0.01 |
| **JM-MO-5** | 0.50 | 0.40 | 0.09 | Ba: 0.01 |
| **JM-MO-6** | 0.50 | 0.40 | 0.09 | Sr: 0.01 |
| **JM-MO-7** | 0.50 | 0.40 | 0.09 | Ca: 0.01 |

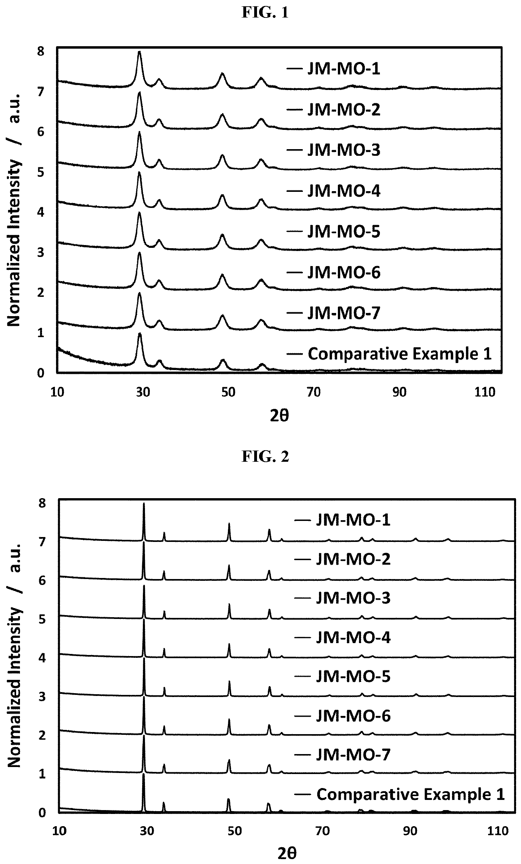

The XRD results of the powders of solid oxides after calcination are shown in FIG. 1. After calcination, all samples exhibit diffraction peaks indicative of the cubic fluorite phase of $CeO_2$. Peak locations are shifted to higher or lower angles than pure $CeO_2$ depending on composition, indicative of the formation of a solid solution wherein some lattice Ce atom locations are occupied by dopant atoms. Furthermore, no additional peaks were detected, indicating the samples did not contain any impurity phases dopant oxides. These results demonstrate that the materials of the present invention can be synthesized with single phase purity.

Example 2: Accelerated Aging

Powdered solid oxides prepared in Example 1 were subjected to high temperature redox conditions to simulate long-term operation on a vehicle. The powders were placed in a tube furnace and heated to 1050 °C at a rate of 10 °C/minute under a stoichiometric gas mixture composed of: 1.2% CO, 0.4% $H_2$, 0.8% $O_2$, 10% $H_2O$, 10% $CO_2$, balance $N_2$ flowing at 5 L/minute. The temperature was then held at 1050 °C for 40 hours while the flowing gas mixture was altered every 5 minutes in the order listed below:

1. Stoichiometric: 1.2% CO, 0.4% $H_2$, 0.8% $O_2$, 10% $H_2O$, 10% $CO_2$, balance $N_2$
2. Lean: 1.2% CO, 0.4% $H_2$, 1.6% $O_2$, 10% $H_2O$, 10% $CO_2$, balance $N_2$
3. Stoichiometric: 1.2% CO, 0.4% $H_2$, 0.8% $O_2$, 10% $H_2O$, 10% $CO_2$, balance $N_2$
4. Rich: 2.4% CO, 0.8% $H_2$, 0.8% $O_2$, 10% $H_2O$, 10% $CO_2$, balance $N_2$

After 40 h, the coated cores were cooled from 1050 °C to <400 °C under the rich gas mixture and then from 400 °C to room temperature under $N_2$ only.

The XRD results of the powders of solid oxides after accelerated aging are shown in **FIG. 2.** Subjecting the powder samples to accelerated aging resulted in the sharpening of diffraction peaks, suggesting growth of crystallites via sintering. However, no additional peaks were formed. These results demonstrate that the materials of the present invention are phase stable to harsh redox conditions at high temperature typical of automotive exhaust systems.

Example 3: Oxygen Storage Capacity (OSC) Test

After being subject to aging conditions described in Example 2, powdered solid oxides of Example 1 were characterized by an OSC test. In this test, samples were first pre-treated by heating to 600 °C and holding for 15 minutes in a 5% $O_2$ (balance $N_2$) atmosphere. While still holding at 600 °C, the gas atmosphere was switched to pure $N_2$ for 5 additional minutes. Then, the test began when a stream of 5000 ppm CO (balance $N_2$) was passed through the powdered solid oxide while measuring the amount of $CO_2$ generated for a period of 30 seconds. The OSC of the solid oxide was calculated using the following equation:

$$OSC = \frac{CO_2 \ generated}{weight \ of \ solid \ oxide}$$

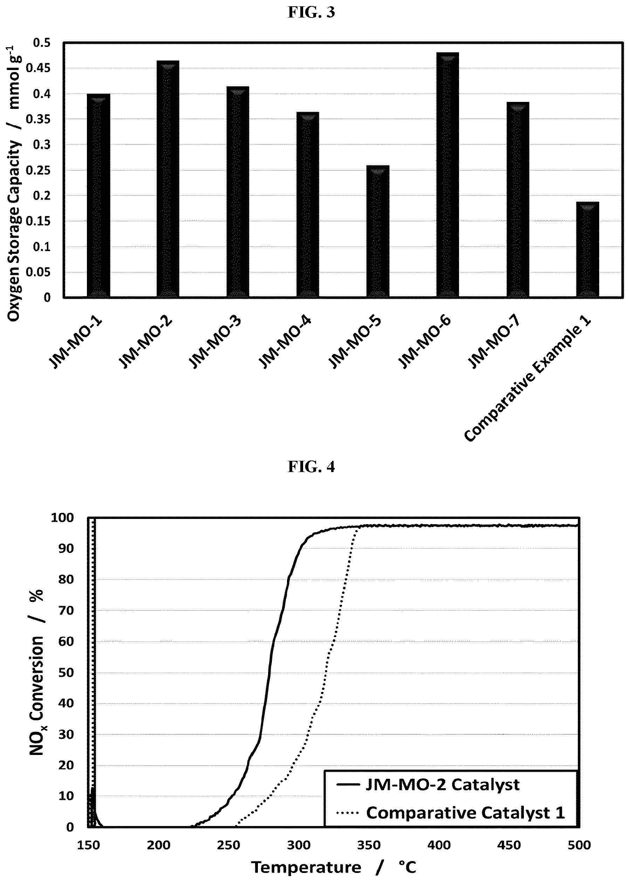

The results of the OSC test are depicted in **FIG. 3.** All example samples of the present invention exhibited a higher OSC than the Comparative Sample 1 containing only Ce and Zr. These results demonstrate that the materials of the present invention exhibit beneficial oxygen storage properties required for application as catalysts in automobile emissions systems.

Example 4: Addition of Platinum Group Metal (PGM) component to solid oxide to form a catalyst

Catalysts were prepared by PGM addition to the Comparative Example 1 and JM-MO-2 to create Comparative Catalyst 1 and JM-MO-2 Catalyst, respectively, in order to demonstrate application in automotive emissions abatement. 10 g of calcined solid oxide (dry basis) was dispersed in 23 g DI water with mechanical mixing to form a slurry. 0.04 g of Rh was then added to the slurry in the form of a rhodium (III) nitrate solution. A solution of ammonium hydroxide was added to the slurry to re-adjust the pH to ~7-8. The slurry was mixed for 2 hours, then transferred to an open crucible and dried overnight at 80 °C. The resulting catalyst powder containing solid oxide and Rh was calcined in air at 500 °C for 4 hours.

Example 5: Three-way Catalysis (TWC) Light-Off Test

Comparative Catalyst 1 and JM-MO-2 Catalyst were subject to a TWC light-off test. In this test, 0.05 g of powdered catalyst mixed with 0.25 g of ground cordierite was loaded into a reactor apparatus capable of heating and flowing a gas mixture designed to simulate gasoline exhaust conditions. The temperature was ramped from 150-600 °C at a rate of 5 °C/min under a gas mixture flowing at 500 cm³/min. The gas composition by volume was: 1% CO, 1500

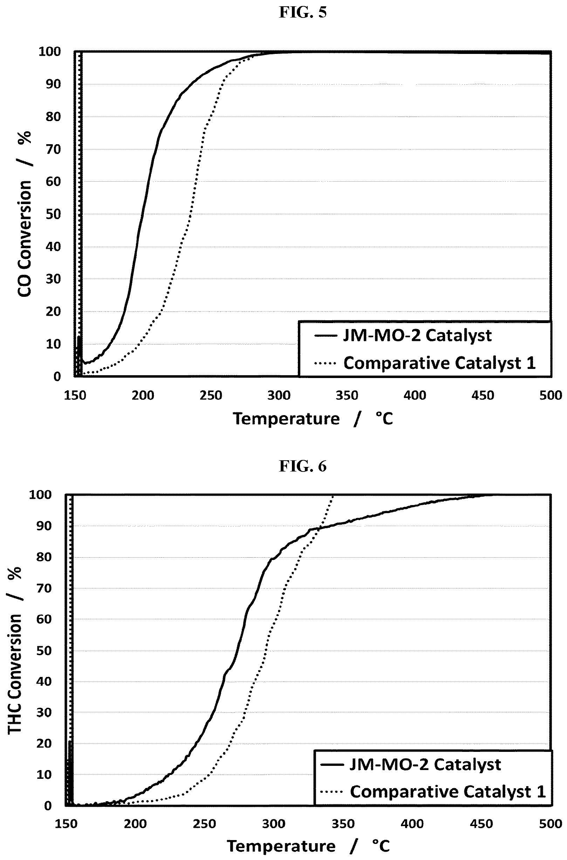

ppm propene ($C_3H_6$), 400 ppm NO, 0.65% $O_2$, 6% $H_2O$ in a balance of $N_2$. The conversions of NO, CO, and total hydrocarbons (THC, comprised of $C_3H_6$) as a function of temperature are reported in **FIG. 4, FIG. 5,** and **FIG. 6,** respectively.

A useful metric for quantifying performance of a catalyst is the $T_{50}$ value which is herein defined as the minimum temperature at which 50% conversion is achieved. Lower $T_{50}$ temperatures mark catalysts that demonstrate enhanced catalytic activity. In each case, the catalytic activity was greater for JM-MO-2 Catalyst than for Comparative Catalyst 1 as evinced by the $T_{50}$ values achieved by each catalyst. JM-MO-2 Catalyst achieved $T_{50}$ values for NO, CO, and THC conversions that were 40 °C, 35 °C, and 20 °C lower, respectively, than the $T_{50}$ values of Comparative Catalyst 1. These results demonstrate that the materials of the present invention exhibit catalytic activity required for application as catalysts in automobile emissions systems.

Example 6: General Preparation of Mixed Oxides with five or more components

A solution of metal ions was prepared by dissolving appropriate metal salts (cerium ammonium nitrate, zirconium oxynitrate, tin (IV) chloride, lanthanum nitrate, neodymium nitrate, yttrium nitrate, praseodymium nitrate, barium nitrate, strontium nitrate) in DI water as described in **Table 3.** A buffer solution was prepared by combining ammonium nitrate, ammonia, and water in a molar ratio of 1:10:89. The metal salt solution was then added to a mechanically stirred vessel containing the buffer solution. A precipitate formed upon mixing of the two solutions. The mixture was allowed to stir for an additional fifteen minutes. The hydrous oxide precipitate was then filtered in a filter press and washed with DI water.

**Table 3 Metal salt solution composition used to prepare doped MO**

| Name | Molar Composition | | | | | |
|---|---|---|---|---|---|---|
| | $H_2O$ | Ce | Zr | Sn | Component 4 | Component 5 |
| **JM-MO-8** | 26 | 0.2 | 0.2 | 0.2 | La: 0.2 | Nd: 0.2 |
| **JM-MO-9** | 26 | 0.2 | 0.2 | 0.2 | La: 0.2 | Pr: 0.2 |
| **JM-MO-10** | 26 | 0.2 | 0.2 | 0.2 | La: 0.2 | Y: 0.2 |
| **JM-MO-11** | 26 | 0.2 | 0.2 | 0.2 | Y: 0.2 | Nd: 0.2 |
| **JM-MO-12** | 26 | 0.2 | 0.2 | 0.2 | Y: 0.2 | Pr: 0.2 |
| **JM-MO-13** | 26 | 0.2 | 0.2 | 0.2 | Pr: 0.2 | Nd: 0.2 |
| **JM-MO-14** | 26 | 0.2 | 0.2 | 0.2 | Ba: 0.2 | Sr: 0.2 |
| **JM-MO-15** | 26 | 0.2 | 0.2 | 0.2 | Ba: 0.2 | La: 0.2 |
| **JM-MO-16** | 26 | 0.2 | 0.2 | 0.2 | Sr: 0.2 | La: 0.2 |
| **JM-MO-17** | 26 | 0.2 | 0.2 | 0.2 | Sr: 0.2 | Nd: 0.2 |

A slurry was prepared by combining hydrous oxide (metals basis), ammonium nitrate, ammonia, and water in a molar ratio of 1:1:10:89 and mechanically stirred for 5 minutes. The slurry was then transferred to a Teflon sleeve and sealed in a Parr stainless-steel acid digestion vessel. The slurry was then heated to 150 °C and mixed via tumbling in an oven for 2 h. Upon cooling to <60 °C, the hydrous oxide was filtered and washed with DI water until the exiting filtrate reached a pH <7. The hydrous oxide was then dried at 90 °C for 16 h, ground to a powder, and further dried at 120 °C for 2 h. Upon drying, the hydrous oxide was calcined in air at 500 °C to form a crystalline solid oxide.

The resulting solid metal oxide compositions and average cationic radii are summarized in **Table 4.** A commercially available mixed oxide containing similar Ce content to the samples of the present example and five total components without the presence of Sn was purchased from a supplier and utilized as Comparative Sample 2. The average cationic radius ($r_{avg}$) is a useful metric for predicting stability of doped cerias of widely varying compositions. The average cationic radius of each doped ceria was calculated using the following equation:

$$r_{avg} = \sum_i^n n_i r_i$$

Wherein, $n_i$ is the mole fraction of each individual cationic component (excluding molar contribution of O) and $r_i$ is each individual cation radius. The method of ionic radius determination used in this work is the 8-coordinate effective ionic radius (as defined in R.D. Shannon, Acta Cryst., 1976, A32, 751). Cerium and tin are assumed to adopt an oxidation state of 4+. Lanthanum, neodymium, praseodymium, and yttrium are assumed to adopt a 3+ oxidation state. Strontium and barium are assumed to adopt a 2+ oxidation state.

**Table 4 Compositions in mole fractions (excluding molar contribution of O) and average cationic radii of doped MO**

| Name | Mole fraction (excluding O) | | | | | $r_{avg}$ (pm) |
|---|---|---|---|---|---|---|
| | Ce | Zr | Component 3 | Component 4 | Component 5 | |
| **Comparative Sample 2** | 0.15 | 0.71 | Y: 0.09 | La: 0.01 | Nd: 0.04 | 89.0 |
| **JM-MO-8** | 0.2 | 0.2 | Sn: 0.2 | La: 0.2 | Nd: 0.2 | 97.8 |
| **JM-MO-9** | 0.2 | 0.2 | Sn: 0.2 | La: 0.2 | Pr: 0.2 | 98.1 |
| **JM-MO-10** | 0.2 | 0.2 | Sn: 0.2 | La: 0.2 | Y: 0.2 | 96.0 |
| **JM-MO-11** | 0.2 | 0.2 | Sn: 0.2 | Y: 0.2 | Nd: 0.2 | 95.0 |
| **JM-MO-12** | 0.2 | 0.2 | Sn: 0.2 | Y: 0.2 | Pr: 0.2 | 95.3 |
| **JM-MO-13** | 0.2 | 0.2 | Sn: 0.2 | Pr: 0.2 | Nd: 0.2 | 97.1 |
| **JM-MO-14** | 0.2 | 0.2 | Sn: 0.2 | Ba: 0.2 | Sr: 0.2 | 106.0 |
| **JM-MO-15** | 0.2 | 0.2 | Sn: 0.2 | Ba: 0.2 | La: 0.2 | 104.0 |
| **JM-MO-16** | 0.2 | 0.2 | Sn: 0.2 | Sr: 0.2 | La: 0.2 | 100.8 |
| **JM-MO-17** | 0.2 | 0.2 | Sn: 0.2 | Sr: 0.2 | Nd: 0.2 | 99.8 |

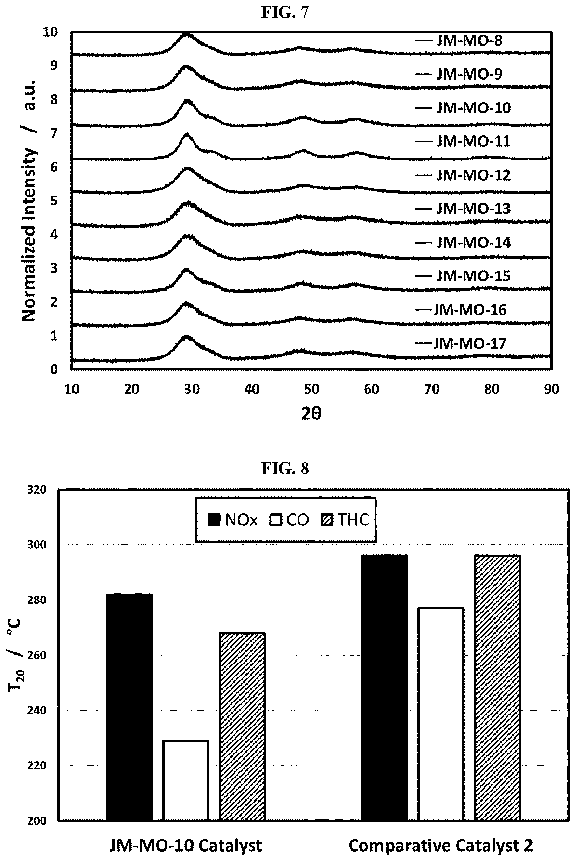

The XRD results of the powders of solid oxides after calcination are shown in **FIG. 7.** After calcination, all samples exhibit diffraction peaks indicative of the cubic fluorite phase of $CeO_2$. Peak locations are shifted to higher or lower angles than pure $CeO_2$ depending on composition, indicative of the formation of a solid solution wherein some lattice Ce atom locations are occupied by dopant atoms. Furthermore, no additional peaks were detected, indicating the samples did not contain any impurity phases dopant oxides. These results demonstrate that the materials of the present invention can be synthesized with single phase purity.

Example 7: Perturbed Three-way Catalysis (TWC) Light-Off Test

Catalysts were prepared by PGM addition to the Comparative Example 2 and JM-MO-2 to create to create Comparative Catalyst 2 and JM-MO-10 Catalyst, respectively, to demonstrate application in automotive emissions abatement. 10 g of calcined solid oxide (dry basis) was dispersed in 23 g DI water with mechanical mixing to form a slurry. 0.3 g of Pt was then added to the slurry in the form of a platinum (II) nitrate solution. A solution of ammonium hydroxide was added to the slurry to re-adjust the pH to ~7-8. The slurry was mixed for 2 hours, then transferred to an open crucible and dried overnight at 80 °C. The resulting catalyst powder containing solid oxide and Pt was calcined in air at 500 °C for 4 hours. The powdered catalysts were then subjected to high temperature redox conditions to simulate long-term operation on a vehicle as described in Example 2.

The catalysts were then subject to a perturbed TWC light-off test. In this test, 0.3 g of powdered catalyst was loaded into a reactor apparatus capable of heating and flowing a gas mixture designed to simulate gasoline exhaust conditions. The temperature was ramped from 150-600 °C at a rate of 15 °C/min under a gas mixture flowing at 3000 $cm^3$/min. The flowing gas was perturbed between rich and lean conditions at a frequency of 1 Hz. The gas compositions by volume were as follows: rich = 6% $H_2O$, 14% $CO_2$, 2000 ppm NO, 0.58% $O_2$, 200 ppm propene ($C_3H_6$), 200 propane ($C_3H_8$), 2.5% CO, and 0.5% $H_2$ in a balance of $N_2$ and lean = 6% $H_2O$, 14% $CO_2$, 2000 ppm NO, 1.93% $O_2$, 200 ppm propene ($C_3H_6$), 200 propane ($C_3H_8$), 0.5% CO, and 0.5% $H_2$ in a balance of $N_2$. The temperatures at which a conversion of 20% of NO, CO, and total hydrocarbons (THC, comprised of $C_3H_6$ and $C_3H_8$) was reached ($T_{20}$) are reported in **FIG. 8.**

A useful metric for quantifying performance of a catalyst is the $T_{20}$ value which is herein defined as the minimum temperature at which 20% conversion is achieved. Lower $T_{20}$ temperatures mark catalysts that demonstrate enhanced catalytic activity. In each case, the catalytic activity was greater for the catalysts of the present invention than for Comparative Catalyst 2 as evinced by the $T_{20}$ values achieved by each catalyst. JM-MO-10 Catalyst achieved $T_{20}$ values for NO, CO, and THC conversions that were 14 °C, 48 °C, and 28 °C lower, respectively, than the $T_{20}$ values of

Comparative Catalyst 2. These results demonstrate that the materials of the present invention exhibit catalytic activity required for application as catalysts in automobile emissions systems.

The foregoing detailed description has been provided by way of explanation and illustration, and is not intended to limit the scope of the appended claims. Many variations in the presently preferred embodiments illustrated herein will be apparent to one of ordinary skill in the art and remain within the scope of the appended claims and their equivalents.

**Claims**

1. A catalyst composition comprising a mixed oxide support material and a platinum group metal supported on the mixed oxide support material, the mixed oxide support material comprising a solid solution mixed oxide having the formula $Ce_wZr_xSn_yMzO_a$, wherein:

$$0.05 \le w \le 0.90;$$

$$0.05 \le x \le 0.90;$$

$$0.001 \le y \le 0.25;$$

$$0.001 \le z \le 0.60;$$

$$w + x + y + z = 1.00;$$

$$1.0 \le a \le 2.0;$$

   and M is an element selected from one or more of sodium, potassium, rubidium, caesium, magnesium, calcium, strontium, barium, scandium, yttrium, titanium, hafnium, vanadium, niobium, tantalum, chromium, molybdenum, tungsten, manganese, technetium, rhenium, iron, ruthenium, osmium, cobalt, rhodium, iridium, nickel, palladium, platinum, copper, silver, gold, zinc, aluminium, gallium, thallium, silicon, germanium, lead, bismuth, lanthanum, praseodymium, neodymium, samarium, europium, gadolinium, terbium, erbium, lutetium, dysprosium, holmium, thulium and ytterbium.

2. The catalyst composition of claim 1, wherein the catalyst composition is for three way catalysis.

3. The catalyst composition of claim 1 or claim 2, wherein the solid solution mixed oxide is at least 95% phase pure.

4. The catalyst composition of any preceding claim, wherein y + z is less than 0.15, preferably less than or equal to 0.10.

5. The catalyst composition of any of claims 1 to 3, wherein $0.05 \le y \le 0.15$.

6. The catalyst composition of any preceding claim, wherein w + x is greater than or equal to 0.80, preferably greater than or equal to 0.85, more preferably greater than or equal to 0.90.

7. The catalyst article of any preceding claim, wherein M comprises two or more different elements.

8. The catalyst composition of any of claims 1 to 3 or claim 7, wherein $0.15 \le w, x \le 0.25$ and $0.30 \le y + z \le 0.70$.

9. The catalyst composition of claim 8, wherein $M_z$ is $M'_{z1}M''_{z2}$, where:

$$0.15 \le z1 \le 0.25;$$

$$0.15 \leq z2 \leq 0.25;$$

M' is an element selected from one of calcium, strontium, barium, scandium, yttrium, hafnium, lanthanum, praseodymium, neodymium, samarium, europium or gadolinium;

M" is an element selected from one or more of sodium, potassium, rubidium, caesium, magnesium, calcium, strontium, barium, scandium, yttrium, titanium, hafnium, vanadium, niobium, tantalum, chromium, molybdenum, tungsten, manganese, technetium, rhenium, iron, ruthenium, osmium, cobalt, rhodium, iridium, nickel, palladium, platinum, copper, silver, gold, zinc, aluminium, gallium, thallium, silicon, germanium, lead, bismuth, lanthanum, praseodymium, neodymium, samarium, europium, gadolinium, terbium, erbium, lutetium, dysprosium, holmium, thulium and ytterbium; and

M' is different to M".

10. The catalyst composition of claim 9, wherein M" comprises only one element.

11. The catalyst composition of claim 9 or claim 10, wherein the mean cationic radius of Ce, Zr, Sn and M in the solid solution mixed oxide is from 90 to 106 pm.

12. The catalyst composition of any preceding claim, wherein M is an element selected from one or more of calcium, strontium, barium, scandium, yttrium, hafnium, lanthanum, praseodymium, neodymium, samarium, europium and gadolinium.

13. The catalyst composition of any preceding claim, wherein the platinum group metal comprises one or more of platinum, palladium and rhodium, preferably wherein the platinum group metal comprises platinum.

14. A catalyst article comprising a substrate and the catalyst composition of any preceding claim, wherein the catalyst composition is disposed on the substrate.

15. The catalyst article of claim 14, wherein the catalyst article is a three way catalyst.

16. A solid solution mixed oxide having the formula $Ce_wZr_xSn_yMzO_a$, wherein:

$$0.05 \leq w \leq 0.90;$$

$$0.05 \leq x \leq 0.90;$$

$$0.001 \leq y \leq 0.25;$$

$$0.001 \leq z \leq 0.60;$$

$$w + x + y + z = 1.00;$$

$$1.0 \leq a \leq 2.0;$$

and M is an element selected from one or more of sodium, potassium, rubidium, caesium, magnesium, calcium, strontium, barium, scandium, yttrium, titanium, hafnium, vanadium, niobium, tantalum, chromium, molybdenum, tungsten, manganese, technetium, rhenium, iron, ruthenium, osmium, cobalt, rhodium, iridium, nickel, palladium, platinum, copper, silver, gold, zinc, aluminium, gallium, thallium, silicon, germanium, lead, bismuth, lanthanum, praseodymium, neodymium, samarium, europium, gadolinium, terbium, erbium, lutetium, dysprosium, holmium, thulium and ytterbium.

17. Use of the catalyst composition of any of claims 1 to 13 or the catalyst article of claim 14 or claim 15 in an emission

treatment system.

FIG. 1

FIG. 2

**FIG. 3**

**FIG. 4**

FIG. 5

FIG. 6

FIG. 7

FIG. 8

Europäisches
Patentamt

European
Patent Office

Office européen
des brevets

## EUROPEAN SEARCH REPORT

**Application Number**

**EP 23 17 2191**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/244002 A1 (KOZLOV ALEXANDR I [US]) 18 October 2007 (2007-10-18) * abstract * * paragraphs [0047] – [0050]; claims 1,17,18 * ----- | 1-17 | INV. B01J23/14 B01D53/94 B01J35/00 B01J23/62 B01J23/63 |
| X | US 2009/185967 A1 (DEMOURGUES ALAIN [FR] ET AL) 23 July 2009 (2009-07-23) * abstract * * paragraphs [0082] – [0085]; claims 42-44; examples 5-16 * ----- | 1-6,8, 10,12-17 | |

TECHNICAL FIELDS
SEARCHED      (IPC)

B01J
B01D

The present search report has been drawn up for all claims

| Place of search | Date of completion of the search | Examiner |
|---|---|---|
| Munich | 19 July 2023 | Fischbach, Malaika |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 17 2191

This annex lists the patent family members relating to the patent documents cited in  the above-mentioned European search report.
The members are as contained in the European Patent Office EDP file on
The European Patent Office is in no way liable for these particulars which are merely given for the purpose of information.

19-07-2023

| Patent document cited in search report | Publication date | Patent family member(s) | | Publication date |
|---|---|---|---|---|
| US 2007244002 A1 | 18-10-2007 | NONE | | |
| US 2009185967 A1 | 23-07-2009 | CA | 2554464 A1 | 27-10-2005 |
| | | CN | 1926066 A | 07-03-2007 |
| | | EP | 1735243 A1 | 27-12-2006 |
| | | FR | 2867769 A1 | 23-09-2005 |
| | | JP | 2007527845 A | 04-10-2007 |
| | | KR | 20060129405 A | 15-12-2006 |
| | | US | 2009185967 A1 | 23-07-2009 |
| | | WO | 2005100249 A1 | 27-10-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20210299647 A1

**Non-patent literature cited in the description**

- **R.D. SHANNON.** *Acta Cryst.,* 1976, vol. A32, 751